# EUROPÄISCHE PATENTSCHRIFT

(11) **EP 2 310 155 B1**
(45) Veröffentlichungstag und Bekanntmachung des Hinweises auf die Patenterteilung: **17.04.2013**
(21) Anmeldenummer: 09777004.4
(22) Anmeldetag: 07.07.2009
(51) Int. Cl.: B22D 2/00, B22D 11/18, B22D 11/20

(54) **TEMPERATURMESSUNG IN EINER KOKILLE DURCH EIN FASEROPTISCHES MESSVERFAHREN**
TEMPERATURE MEASUREMENT IN A CHILL MOLD BY A FIBER OPTIC MEASUREMENT METHOD
MESURE DE LA TEMPÉRATURE DANS UNE LINGOTIÈRE À L'AIDE D'UN PROCÉDÉ DE MESURE À FIBRE OPTIQUE

(30) Priorität: 10.07.2008 DE 102008032341; 04.12.2008 DE 102008060507
(43) Veröffentlichungstag der Anmeldung: 20.04.2011
(73) Patentinhaber: SMS Siemag AG, 40237 Düsseldorf (DE)
(72) Erfinder: ARZBERGER, Matthias, 45470 Mülheim (DE); LIEFTUCHT, Dirk, 48739 Legden (DE)
(74) Vertreter: Klüppel, Walter
(86) Internationale Anmeldenummer: PCT/EP2009/004901
(87) Internationale Veröffentlichungsnummer: WO 2010/003632

(56) Entgegenhaltungen:
- EP-A- 0 305 832
- DE-A1-102006 036 708
- DE-A1-102006 037 728
- JP-A- 9 047 855

## Beschreibung

### Gebiet der Erfindung

Die Erfindung stellt eine Stranggleßkokille zum Gießen von Metall, die mindestens eine Kokillen-Kupferplatte umfasst, wobei auf der Außenseite der Kokillen-Kupferplatte Nuten vorgesehen sind, in denen Lichtwellenlelterfasem zur Temperaturmessung angeordnet und mit einem Temperaturerfassungssystem verbunden sind. Die Erfindung dient zur Verbesserung der Ortsauflösung der Temperaturerfassung in einer Kokille gegenüber den bekannten Temperaturerfassungssystemen und erlaubt insbesondere eine verbesserte Längsriss- und Durchbruchserkennung.

### Stand der Technik

Die Temperaturerfassung in einer Kokille ist ein kritisches Problem, das im Zuge von schnell gießenden Gießanlagen zunehmend an Bedeutung gewinnt. Meistens werden Temperaturen In der Kokille vor allem über Thermoelemente erfasst, die entweder durch Bohrungen in der Kupferplatte der Kokille geführt werden oder auf den Kupferplatten der Kokille aufgeschweißt sind. Solche Messverfahren beruhen auf der Auswertung von Thermospannungen. Die Anzahl und die Größe solcher Thermoelementen ist beschränkt. So können Thermoelemente ohne einen zu großen Aufwand eines Umbaus häufig lediglich an den Positionen der Dehnschrauben eingesetzt werden. Zudem geht mit einer Erhöhung der Anzahl der Thermoelemente ein sehr hoher Verkabelungsaufwand einher. Diese Sensoren sind außerdem gegen elektromagnetische Felder, welche zum Beispiel durch elektromagnetische Bremsen oder Rührer entstehen, störanfällig. Zudem müssen zum Schutz der Thermoelemente, inkl. ihrer Verkabelung, aufwändlge Schutzeinrichtungen bereitgestellt werden. Beim Wechsel der Kupferplatten einer Kokille, der regelmäßig durchgeführt wird, müssen die Thermosensoren erneut verkabelt werden, wobei neben dem großen Arbeitsaufwand Verwechselungen auftreten können.

Die WO 2004/082869 zeigt ein Verfahren zur Bestimmung der Temperatur In einer Stranggießkokille mit Thermoelementen, die auf einer Kupferplatte außerhalb der Kokille angeordnet sind und durch Bohrungen In die Kokille hineinragen.

DE 3436331 zeigt ein ähnliches Verfahren zur Temperaturmessung in metallurgischen Gefäßen. Insbesondere in Stranggießkokillen, in dem Thermoelemente in einer großen Anzahl von Querbohrungen angeordnet werden.

Diese beiden Verfahren weisen die oben genannten Nachteile auf. Zudem erfordert das Vornehmen einer Vielzahl von Bohrungen einen großen finanzlellen und zeitlichen Aufwand. Eine sehr große Anzahl von derart installierten Thermoelementen resultiert leider In einen Immensen Verkabelungsaufwand.

Aus JP 09047855 ist ein Verfahren zur Durchbruchfrüherkennung beim Stranggießen bekannt, bei dem ein Lichtwellenleiter auf der Heißseite der Kokille entweder in eingebetteter oder in exponierter Form schlangenförmig angeordnet ist. Diese Anordnung befindet sich in Richtung der Breite an der Heißseite der Kokille.

In DE 102 36 033, aus dem Bereich zur Überwachung von feuerfesten Auskleidungen von Schmelzöfen, insbesondere von Induktionsöfen, ist ein Temperaturmessverfahren mit Hilfe von Lichtleiterfasern beschrieben, wobei Lichtleitfasern auf einem Bahnmaterial hinter mehreren Isolierungsschichten aufgebracht und zur faseroptischen Rückstreumessung verwendet werden. Solche Systeme sind allerdings in dieser Form für die Temperaturmessung In einer Kokille ungeeignet und nicht für die exakte örtliche Temperaturerfassung In einer Gießkokille ausgelegt.

Die technische Aufgabe, die sich somit stellt, ist eine verbesserte, das heißt insbesondere eine höher ortsaufgelöste Temperaturmessung in einer Kokille zu ermöglichen, die zudem einen möglichst geringen Installationsaufwand mit sich bringt, um unter anderem die Längsriss- und / oder die Durchbruchserkennung In der Kokille zu verbessern.

### Offenbarung der Erfindung

Die oben genannte technische Aufgabe wird durch die nachfolgend offenbarte Erfindung gelöst, Insbesondere stellt die Erfindung eine Stranggießkokille zum Gießen von Metall, die mindestens eine Kokillen-Kupferplatte umfasst, wobei auf der Außenseite der Kokillen-Kupferplatte Nuten vorgesehen sind, in denen Lichtwellenleiterfasem zur Temperaturmessung angeordnet und mit einem Temperaturertassungssystem verbunden sind, dadurch gekennzeichnet, dass die Lichtwellenleiterfasern mäanderförmig in den Nuten angeordnet sind und dass die Nuten zwischen Kühlkanälen auf der Außenseite der Kokillen-Kupferplatte angeordnet sind.

Die Temperaturerfassung mittels Lichtleiterfasern ermöglicht einen wesentlich geringeren Verkabelungsaufwand als die Verwendung von Thermoelementen in der Kokille. Zudem wird erheblich weniger Arbeits- und Kostenaufwand zur Installation der Fasern in der Kokillen-Kupferplatte benötigt. Die Verwendung der Lichtwellenleiter in der obigen Stranggleßkokille ermöglicht zudem eine erheblich höhere Ortsauflösung als die Temperaturmessung durch die beschriebenen Systeme unter Verwendung von Thermoelementen in Bohrungen. Eine Glasfaserleitung kann so zum Beispiel mehr als hundert Thermoelementen samt Kabeln ersetzen. Es müssen auch keine aufwendigen Schutzeinrichtungen mehr für die Thermoelemente samt Verkabelung bereitgestellt werden.

In einer weiteren bevorzugten Ausführungsform weist die Stranggießkokille mindestens zwei, der Länge nach versetzte, Lichtwellenleherfasern auf, die jeweils in einer Nut angeordnet sind. Dadurch kann die Ortsauflösung der Temperaturmessung noch weiter verbessert werden.

In einer weiteren bevorzugten Ausführungsform weist die Stranggießkokllle Lichtwellenleiterfasern auf, die jeweils in der Festseite, der Losseite und vorzugsweise jeweils in den beiden Schmalseiten der Kokille angeordnet sind.

In einer weiteren bevorzugten Ausführungsform werden die Lichtwellenleiter jeder einzelnen Seite jeweils über eine Kupplung und über jeweils einen weiteren separaten Lichtwellenleiter mit dem Temperaturerfassungssystem verbunden.

In einer weiteren bevorzugten Ausführungsform werden die Lichtwellenleiter jeder einzeinen Seite in Reihenschaltung über Kupplungen miteinander verbunden und sind über eine weitere Kupplung mit dem Temperaturerfassungssystem verbunden.

In einer weiteren bevorzugten Ausführungsform wird das Laserlicht über mindestens eine Kupplung zur Kokille geführt, durch die die Kanäle von mehreren Lichtwellenlelterfasem gleichzeitig übertragbar sind.

In einer weiteren bevorzugten Ausführungsform sind die Kupplungen Linsenkupplungen.

Außerdem betrifft die Erfindung ein Verfahren zur Temperaturmessung in der Stranggießkokille.

In einer weiteren bevorzugten Ausführungsform des Verfahrens werden Daten des Temperaturerfassungssystems an einen Prozessrechner weitergeleitet, der diese Daten verarbeitet und durch diese den Gießvorgang steuert.

Kurze Beschreibung der Figuren
- Figur 1: zeigt schematisch eine zweldimensionale Ansicht der Außenseite einer Kupferplatte einer Kokille mit Nuten und darin angeordneten Lichtleiterfasern.
- Figur 2: zeigt einen Querschnitt einer Kokillenbreitseite mit Kühlschlitzen und den zwischen den Kühlschlitzen angeordneten Lichtleitern. Die stark vereinfachte Darstellung zeigt nicht die korrekten Größenverhältnisse.
- Figur 3: zeigt ein Schema zur Anordnung von Lichtwellenleitern in den verschiedenen Seiten einer Kokille sowie deren Verbindung zu einer Temperaturerfassungseinheit und einem Prozessrechner.
- Figur 4: zeigt ein weiteres Schema zur Anordnung von Lichtwellenieitem in den verschiedenen Seiten einer Kokille sowie deren Verbindung in Reihenschaltung und die Verbindung der hintereinandergeschalteten Lichtwellenleiter mit einer Temperaturerfassungseinheit und einem Prozessrechner.
- Figur 5: zeigt schematisch den Querschnitt durch eine Linsenkupplung.

### Detaillierte Beschreibung der Ausführungsbeispiele

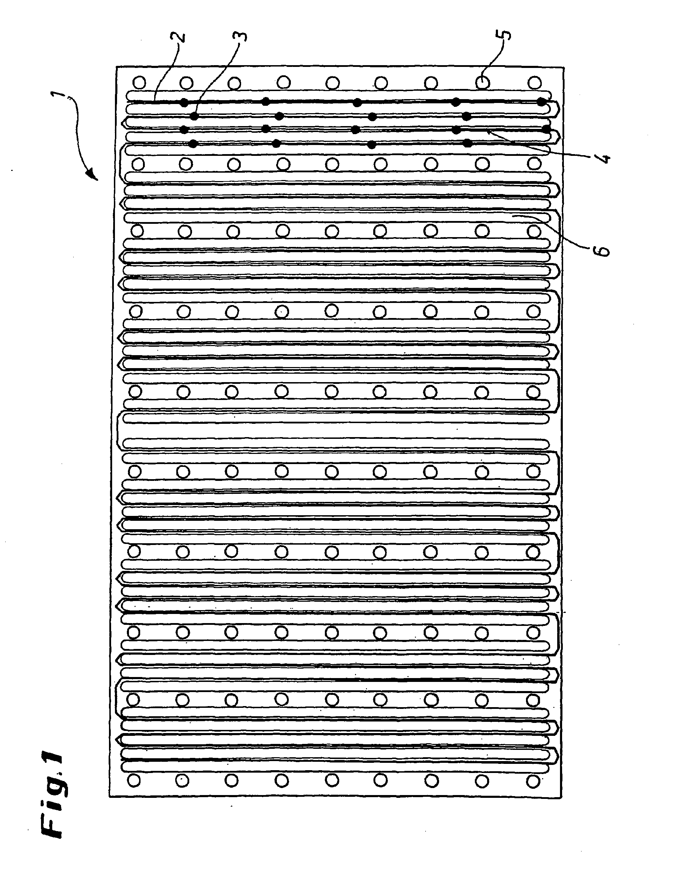

In Figur 1 ist ein Ausführungsbeispiel der Erfindung gezeigt, in dem eine Lichtwellenleiterfaser 2 mäanderförmig zwischen den Kühlkanälen 6 auf der Rückseite einer Kupferplatte 1 einer Kokille in Nuten 4 verlegt ist. In dem Ausführungsbeispiel wird zur besseren Darstellung ein Lichtwellenleiter 2 gewählt, der nur wenige Messstellen 3 beinhaltet. Es können natürlich wesentlich mehr Messstellen 3 vorgesehen werden. Weiterhin sind in diesem Ausführungsbeispiel Dehnschrauben 5 sichtbar, in denen bspw. Thermoelemente angeordnet waren oder angeordnet sein können. In diesem Ausführungsbeispiel ist es erkennbar, dass die Auflösung senkrecht zur Gießrichtung im Vergleich zu einer ausschließlichen Anordnung von Thermoelementen in den Dehnschrauben 5 vervielfacht ist, zum Beispiel verdoppelt ist. Durch diese vorteilhafte Anordnung und Verwendung der Lichtwellenleiterfasem 2, kann gerade die Entstehung von Längsrissen besser überwacht werden. Diese Verbesserung der Auflösung kann sogar entscheidend sein, da die Abstände der Dehnschrauben 5 im Allgemeinen größer als Temperaturerfassungsradius der Thermoelemente ist. Somit liegen bei einer reinen Anordnung der Thermoelemente in den Dehnschrauben 5 Bereiche in der Kupferplatte vor, die nicht mithilfe der Thermoelemente überwacht werden. Die Anordnung der Lichtleiterfasern 2, wie in Figur 1 gezeigt überwindet dieses Problem und gewährleistet eine flächendeckende Überwachung der Temperatur in der Kupferplatte der Kokille 1.

Unabhängig von diesem Ausführungsbeispiel ist es zum Beispiel möglich die Lichtwellenleiterfasem 2 in den Nuten 4 mittels Gießharz einzugießen, sie können aber auch mit anderen üblichen Verfahren in den Nuten 4 befestigt werden. Weiterhin ist es möglich, dass die Lichtwellenleiterfasem 2 zum Zweck eines verbesserten Schutzes vor äußeren Einflüssen einen Edelstahlmantel besitzen. Zudem können generell mehrere solcher Lichtleiterfasern 2 innerhalb eines E-delstahlmantels bzw. einer Edelstahlhülle angeordnet sein, so dass selbst bei selten auftretenden Defekten einer Faser 2 eine andere Faser 2, die bereits in der Hülle verlegt ist, weiterverwendet werden kann. Zudem ist es denkbar, dass innerhalb einer Hülle mehrere Fasern 2 zur Messung angeordnet werden, wodurch die Messung weiter an Genauigkeit gewinnt, da so der Abstand der Messstellen 3 beliebig eng gewählt werden kann.

Die Lichtwellenleiterfasem 2 können vorzugsweise einen Durchmesser zwischen 0,1 mm und 0,2 mm oder sonstige übliche Durchmesser besitzen. Der Durchmesser einer Hülle, aus z. B. Edelstahl, kann zwischen 0,5 mm und 6 mm variieren. Der Durchmesser der Nuten 4 kann vorzugweise zwischen 1 mm und 10 mm liegen oder je nach Anwendung auch mehrere cm groß sein.

Weiterhin ist es möglich, zur Verbesserung der Ortsauflösung mehrere Lichtwellenlefterfasem, innerhalb einer Nut 4 anzuordnen. Dadurch kann die Messstellenanzahl 3 stark erhöht werden. Dadurch kann die Auflösung in Richtung der Kühlkanäle 6, d.h. in Gießrichtung, gegenüber der Abbildung beliebig vervielfacht werden, beispielsweise verdoppelt oder vervierfacht.

Allgemein können durch den Einsatz von ein bis zwei Glasfaserleitungen bzw. Lichtwellerileiterfasem 60 bis 120 Thermoelemente samt Verkabelung ersetzt werden. Die Messstellenanzahl ist im Prinzip lediglich durch die Rechenkapazität des eingesetzten Temperaturerfassungssystems 10 beschränkt. Es ist somit möglich mit einem entsprechenden Temperaturerfassungssystem 10 die Anzahl der Messstellen noch wesentlich zu erhöhen, so dass auch pro Lichtwellenleiterfaser 2 mehr als 500 Messstellen realisiert werden können. Durch diese wesentlich dichtere Messstellenanzahl kann die Ortsauflösung noch weiter vervielfacht werden.

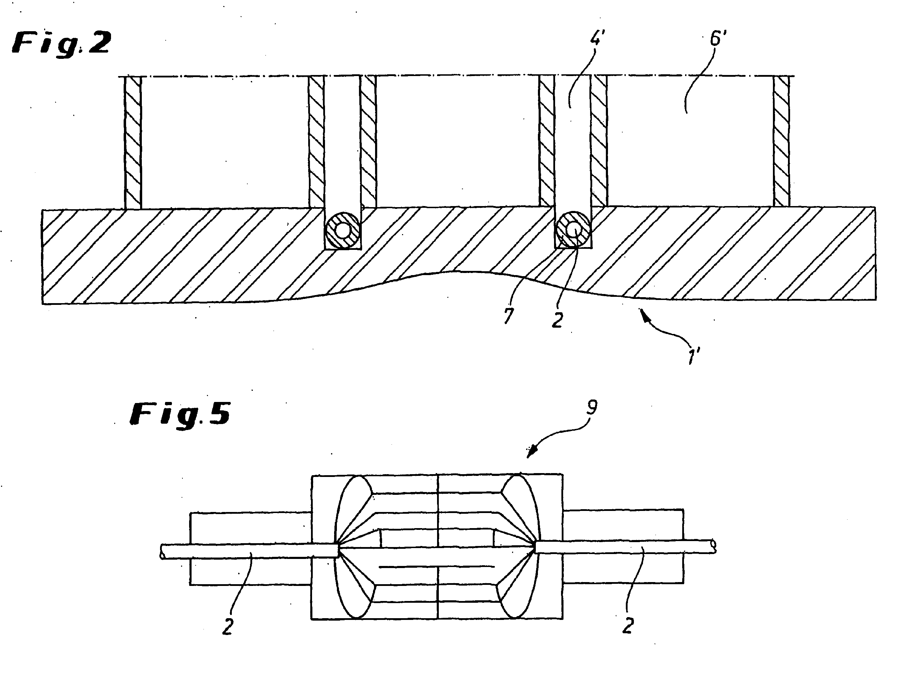

Figur 2 zeigt einen Querschnitt einer Kokillen-Kupferplatte 1' einer Breitseite einer Kokille nach einem weiteren Ausführungsbeispiel der Erfindung. Unten auf der Abbildung ist die Innenseite der Kokille zu sehen. Auf der Außenseite der Kokillen-Kupferplatte 1' (oben) befinden sich Kühlkanäle 6', zwischen denen sich Schlitze bzw. Nuten 4' befinden, in denen Lichtwellenleiter 2 in Kontakt mit der Kokillen-Kupferplatte angeordnet sind. Die Lichtwellenleiter 2 besitzen in diesem Ausführungsbeispiel einen Edelstahlmantel 7, sie können jedoch auch ohne Ummantelung im System vorgesehen sein. Zudem können mehrere Lichtwellenleiter, bzw. Lichtwellenleiterfasem 2 innerhalb eines solchen Mantels 7 angeordnet sein. Außerdem sind die Lichtwellenleiter 2 in diesem Beispiel vorzugsweise mit Gießharz in den Nuten 4' eingegossen. Die Darstellung in Figur 2 zeigt nicht die realistischen Größenverhältnisse zwischen Nuten 4', Kühlkanälen 6', Lichtwellenleiter 2 und Kokillen-Kupferplatte 1'. Die Größe der Nuten 4', Lichtwellenleiter 2 und der Kühlkanäle 6' hängen von der speziell verwendeten Kokille ab und können in den Größenordnungen liegen, wie sie auch in der Beschreibung zu Figur 1 genannt sind.

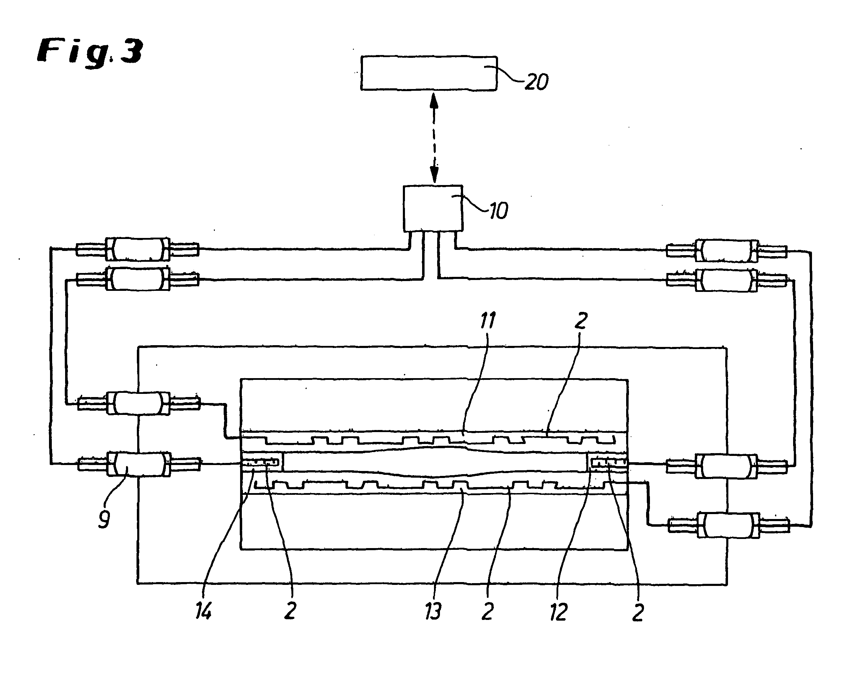

Figur 3 zeigt ein exemplarisches Schaltungsschema der mit dem Temperaturerfassungssystem 10 verknüpften Lichtwellenleiter 2. In diesem Ausführungsbeispiel sind Lichtwellenleiterfasern 2 in der Festseite 11, der Losseite 13 und in den beiden Schmalseiten 12, 14 der Kokille angeordnet. Diese Lichtwellenleiter der einzelnen Seiten sind jeweils über Lichtwellenielterkabel, bzw. weitere Lichtwellenleiter, mit der Auswerteeinheit 10 verbunden. Zur Verbindung jeder einzelnen Lichtwellenleiterfaser 2 mit dem Temperaturerfassungssystem 10 sind sog. Linsenkupplungen 9 vorgesehen. Es können wahlweise noch wesentlich mehr Linsenkupplungen (oder keine) zwischen der Auswerteeinheit und den Fasern in der Kokille vorgesehen sein, was die Qualität des Signals nicht weiter nennenswert beeinflusst. Es ist auch möglich mehrere Fasern 2 pro Kokillenseite 11,12,13,14 vorzusehen und diese ebenso mit dem Temperaturerfassungssystem 10 zu koppeln. Zudem ist es auch möglich die Temperaturerfassung nur auf einer, zwei oder drei der Kokillenseiten 11,12,13,14 vorzusehen.

Das Temperaturerfassungssystem 10 ist mit einem Prozessrechner 20 verbunden. Mit Hilfe dieses Temperaturerfassungssystems 10 oder wahlweise auch mit einem weiteren externen System, wird Laserlicht generiert, dass in die Lichtwellenleiter 2 eingespeist wird. Die von den Lichtwellenleiterfasem 2 gesammelten Daten werden mittels des Temperaturerfassungssystems in Temperaturen umgerechnet und den verschiedenen Orten der Kokille zugeordnet. Die Auswertung kann z. B. nach dem bekannten Faser-Bragg-Gitter-Verfahren (FBG-Verfahren) erfolgen. Bei diesem Verfahren werden geeignete Lichtwellenleiter verwendet, die Messstellen mit einer periodischen Variation des Brechungsindex, bzw. Gitter mit solchen Variationen, eingeprägt bekommen. Diese periodische Variation des Brechungsindex führt dazu, dass der Lichtwellenleiter in Abhängigkeit der Periodizität für bestimmte Wellenlängen an den Messstellen einen dielektrischen Spiegel darstellt. Durch eine Temperaturänderung an einem Punkt wird die Bragg-Wellenlänge verändert, wobei genau diese reflektiert wird. Licht, das die Bragg-Bedingung nicht erfüllt, wird durch das Bragg-Gitter nicht wesentlich beeinflusst. Die verschiedenen Signale der unterschiedlichen Messstellen können dann aufgrund von Laufzeitunterschieden voneinander unterschieden werden. Der detaillierte Aufbau solcher Faser-Bragg-Gitter, sowie der entsprechenden Auswerteeinheiten sind allgemein bekannt. Die Genauigkeit der Ortsauflösung ist durch die Anzahl der eingeprägten Messstellen gegeben. Die Größe einer Messstelle kann zum Beispiel im Bereich von 1 mm bis 5 mm liegen.

Alternativ kann zur Messung der Temperatur auch das "Optical-Frequency-Domain-Reflectometry"-Verfahren (OFDR-Verfahren) oder das "Optical-Time-Domain-Reflectometry"-Verfahren (OTDR-Verfahren) verwendet werden. Diese beiden Verfahren basieren auf dem Prinzip der faseroptischen Ramanrückstreuung, wobei ausgenutzt wird, dass eine Temperaturveränderung am Punkt eines Lichtleiters eine Veränderung der Ramanrückstreuung des Lichtwellenleitermaterials verursacht. Mithilfe der Auswerteeinheit, zum Beispiel einem Raman-Reflektometer, können dann die Temperaturwerte entlang einer Faser ortsaufgelöst bestimmt werden, wobei bei diesem Verfahren über eine bestimmte Länge des Leiters gemittelt wird. Diese Länge beträgt derzeit einige Zentimeter. Die verschiedenen Messstellen werden wiederum durch Laufzeitunterschiede voneinander getrennt. Der Aufbau solcher Systeme zur Auswertung nach den genannten Verfahren ist allgemein bekannt, ebenso wie die nötigen Laser, die das Laserlicht innerhalb der Faser 2 erzeugen.

Die durch die Temperaturerfassungseinheit 10 gewonnenen ortsaufgelösten Temperaturdaten werden dann vorzugsweise an einen Prozessrechner 20 weitergeleitet, der entsprechend der Temperaturverteilung in der Kokille, die Gießparameter, wie zum Beispiel die Gießgeschwindigkeit oder die Kühlung und /oder andere gängige Parameter, regeln kann.

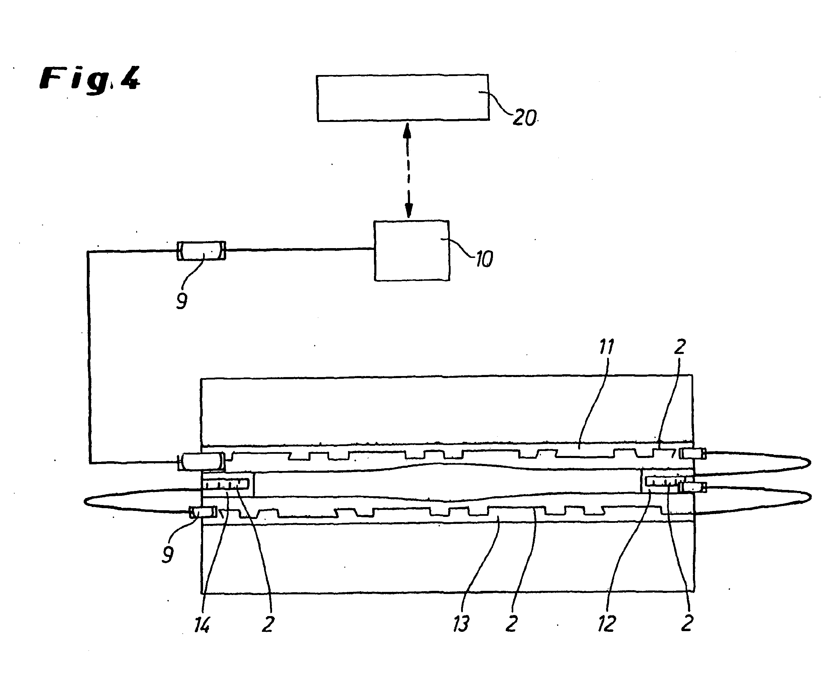

Figur 4 zeigt ein schematisches Schaltbild einer Anordnung von Lichtwellenleiterfasern 2 in den Seitenwänden einer Kokille. Im Gegensatz zu Figur 3 sind allerdings die Lichtwellenleiter 2 in den einzelnen Seitenwänden der Kokille nun durch eine Reihenschaltung miteinander verbunden. Das heißt in diesem Fall, dass eine Lichtwellenleiterfaser 2 der ersten Schmalseite 12 über eine Linsenkupplung 9 und mit einer Lichtwellenleiterfaser 2 der Losseite 13 verbunden ist und die Lichtwellenleiterfaser 2 der Losseite 13 über eine Linsenkupplung 9 mit einer Lichtwellenleiterfaser 2 der zweiten Schmalseite 14 verbunden ist und die Lichtwellenleiterfaser 2 der zweiten Schmalseite 14 über eine Linsenkupplung 9 mit einer Lichtwellenleiterfaser 2 der Festseite 11 verbunden ist und die Lichtwellenleiterfaser 2 der Festseite 11 über eine Linsenkupplung 9 mit dem Temperaturerfassungssystem 10 verbunden ist. Es ist klar, dass die Reihenfolge der Sensoren der vier Seiten, falls gewünscht, auch beliebig anders gewählt sein kann. Durch diese Art einer Reihenschaltung wird der Verkabelungsaufwand abermals deutlich reduziert. Es ist auch möglich, mehrere Fasern 2 pro Kokillenseite 11, 12, 13, 14 zu verwenden und diese ebenso in Reihenschaltung zu koppeln. Zudem ist es auch möglich die Temperaturerfassung auf nur einer, zwei oder drei der Kokillenseiten 11, 12, 13, 14 vorzusehen.

Zur Auswertung kommen wie in Abbildung 3 das FBG-Verfahren, das OTDR- oder das OFDR-Verfahren in Frage. Darüberhinaus können generell auch andere geeignete Verfahren verwendet werden, um den Temperaturverlauf entlang der Fasern zu bestimmen.

Figur 5 zeigt einen beispielhaften Querschnitt durch eine Linsenkupplung 9 wie sie in den Abbildungen 3 und 4 gezeigt ist. Die Kupplung 9 besteht aus zwei Hälften, die an ihren beiden Enden mit jeweils einen Lichtwellenleiter 2 gekoppelt sind. Diese Kupplungen verfügen über ein internes Linsensystem bei dem der zu übertragende Laserstrahl beim Faseraustritt aufgefächert wird und auf der anderen Kupplungsseite wieder gebündelt wird. Zwischen den beiden Kupplungshälften wird der Strahl parallel geführt. In einer solchen Kupplung können mehrere Lichtwellenleiterkanäle gleichzeitig übertragen werden. Die Linsenkupplungen können auch in Form von sogenannten Outdoor-EBC-Steckern ("Extended Beam Connector") ausgeführt sein. Solche Kupplungen sind sehr robust und unempfindlich gegen etwaige Verschmutzungen.

### Bezugszeichenliste

- 1., 1'.: Kokillen-Kupferplatte
- 2.: Lichtwellenleiterfaser
- 3.: Messstelle
- 4., 4'.: Nut
- 5.: Dehnschraube
- 6., 6'.: Kühlkanal
- 7.: Edelstahlmantel
- 9.: Linsenkupplung
- 10.: Temperaturerfassungssystem
- 11.: Festseite
- 12.: Erste Schmalseite
- 13.: Losseite
- 14.: Zweite Schmalseite
- 20.: Prozessrechner

## Patentansprüche

1. Stranggießkokille zum Gießen von Metall, die mindestens eine Kokillen-Kupferplatte (1, 1') umfasst, wobei in der Kokillen-Kupferplatte (1, 1') Nuten (4, 4') vorgesehen sind, In denen Lichtwellenleiterfasem (2) zur Temperaturmessung angeordnet und mit einem Temperaturerfassungssystem (10) verbunden sind, wobei die Lichtwellenleiterfasern (2) mäanderförmig in den Nuten (4, 4') angeordnet sind,
**dadurch gekennzeichnet, dass** die Nuten (4, 4') zwischen Kühlkanälen (6, 6') auf der Außenseite der Kokillen-Kupferplatte (1, 1') angeordnet sind.

2. Stranggleßkokllle nach Anspruch 1,
wobei mindestens zwei, der Länge nach versetzte, Lichtwellenleiterfasem (2) in jeweils einer Nut (4, 4') angeordnet sind.

3. Vorrichtung nach einem der vorhergehenden Ansprüche,
wobei die Lichtwellenleiterfasern (2) Jeweils in einer Festseite (11), einer Losseite (13) und jeweils in beiden Schmalseiten (12, 14) der Kokille angeordnet sind.

4. Vorrichtung nach Anspruch 3,
wobei die Lichtwellenleiter (2) jeder einzelnen Seite (11, 12, 13, 14) jeweils über eine Kupplung (9) und über jeweils einen weiteren separaten Lichtwellenleiter (2) mit dem Temperaturerfassungssystem (10) verbunden sind.

5. Vorrichtung nach Anspruch 3,
wobei die Lichtwellenleiter (2) jeder einzelnen Seite (11, 12, 13, 14) in Reihenschaltung über Kupplungen (9) miteinander verbunden sind und über eine weitere Kupplung (9) mit dem Temperaturerfassungssystem (10) verbunden sind.

6. Vorrichtung nach einem der vorhergehenden Ansprüche,
wobei das Laserlicht über mindestens eine Kupplung (9) zur Kokille geführt ist, durch die Kanäle von mehreren Lichtwellenleiterfasern (2) gleichzeitig übertragbar sind.

7. Vorrichtung nach einem der Ansprüche 3 bis 6,
wobei die Kupplungen (9) Linsenkupplungen darstellen.

8. Verfahren zur Temperaturmessung in einer Kokille einer Gießanlage mit einer Vorrichtung gemäß einem der Ansprüche 1-7.

9. Verfahren gemäß Anspruch 8,
wobei Daten des Temperaturerfassungssystems (10) an einen Prozessrechner (20) weitergeleitet werden, der diese Daten verarbeitet und durch diese den Gleßvorgang steuert.

## Claims

1. Continuous casting mould for casting metal, which comprises at least one mould copper plate (1, 1'), wherein provided in the mould copper plate (1, 1') are grooves (4, 4') in which optical waveguide fibres (2) for temperature measurement are arranged, the fibres being connected with a temperature detection system (10), wherein the optical waveguide fibres (2) are arranged in meander-form in the grooves (4, 4'), **characterised in that** the grooves (4, 4') are arranged between cooling channels (6, 6') on the outer side of the mould copper plate (1, 1').

2. Continuous casting mould according to claim 1, wherein at least two optical waveguide fibres (2), which are offset with respect to length, are each arranged in a respective groove (4, 4').

3. Device according to one of the preceding claims, wherein the optical waveguide fibres (2) are respectively arranged in a fixed side (11), a movable side (13) and each of the two narrow sides (12, 14) of the mould.

4. Device according to claim 3, wherein the optical waveguides (2) of each individual side (11, 12, 13, 14) are each connected by way of a coupling (9) and by way of a further separate optical waveguide (2) with the temperature detection system (10).

5. Device according to claim 3, wherein the optical waveguides (2) of each individual side (11, 12, 13, 14) are connected together in series connection by way couplings (9) and are connected by way of a further coupling (9) with the temperature detection system (10).

6. Device according to any one of the preceding claims, wherein the laser light is guided by way of at least one coupling (9) to the mould, through which channels of several optical waveguide fibres (2) are simultaneously transmissible.

7. Device according to any one of claims 3 to 6, wherein the couplings (9) represent lens couplings.

8. Method of temperature measurement in a mould of a casting plant with a device according to any one of claims 1 to 7.

9. Method according to claim 8, wherein data of the temperature detection system (10) is passed on to a process computer (20) which processes these data and by which the casting process is controlled.

## Revendications

1. Coquille de coulée continue pour la fonte de métal, qui comprend au moins une plaque de coquille en cuivre (1, 1'), des rainures (4, 4') étant prévues dans la plaque de coquille en cuivre (1, 1'), dans lesquelles sont disposées des fibres optiques (2) pour la mesure de la température, qui sont reliées à un système d'enregistrement de la température (10), les fibres optiques (2) étant disposées en méandres dans les rainures (4, 4'), **caractérisée en ce que** les rainures (4, 4') sont disposées entre des canaux de refroidissement (6, 6') à l'extérieur de la plaque de coquille en cuivre (1, 1').

2. Coquille de coulée continue selon la revendication 1, dans laquelle au moins deux fibres optiques (2), décalées en ce qui concerne leur longueur, sont disposées dans respectivement une rainure (4, 4').

3. Dispositif selon l'une quelconque des revendications précédentes, dans lequel les fibres optiques (2) sont disposées respectivement du côté fixe (11), du côté mobile (13) et respectivement des deux côtés étroits (12, 14) de la coquille.

4. Dispositif selon la revendication 3, dans lequel les fibres optiques (2) de chaque côté individuel (11, 12, 13, 14) sont reliées respectivement via un couplage (9) et via respectivement une fibre optique séparée supplémentaire (2) au système d'enregistrement de la température (10).

5. Dispositif selon la revendication 3, dans lequel les fibres optiques (2) de chaque côté individuel (11, 12, 13, 14) sont reliées les unes aux autres dans un montage en série via des couplages (9) et sont reliées via un couplage supplémentaire (9) au système d'enregistrement de la température (10).

6. Dispositif selon l'une quelconque des revendications précédentes, dans lequel la lumière laser est guidée en direction de la coquille via au moins un couplage (9) à travers lequel les canaux de plusieurs fibres optiques (2) peuvent être transférés de manière simultanée.

7. Dispositif selon l'une quelconque des revendications 3 à 6, dans lequel les couplages (9) représentent des couplages en forme de lentilles.

8. Procédé pour la mesure de la température dans une coquille d'une installation de coulée continue avec un dispositif selon l'une quelconque des revendications 1 à 7.

9. Procédé selon la revendication 8, dans lequel les données du système d'enregistrement de la température (10) sont transférées à un calculateur de processus (20) qui traite ces données et qui commande le processus de coulée continue en s'y référant.
